(19) Europäisches Patentamt
European Patent Office
Office européen des brevets

(11) **EP 3 549 993 A1**

(12) **EUROPEAN PATENT APPLICATION**
published in accordance with Art. 153(4) EPC

(43) Date of publication:
**09.10.2019 Bulletin 2019/41**

(21) Application number: **17875576.5**

(22) Date of filing: **29.11.2017**

(51) Int Cl.:
*C09J 201/00* (2006.01)   *C09J 7/00* (2018.01)
*C09J 7/20* (2018.01)   *C09J 11/06* (2006.01)
*C09J 11/08* (2006.01)   *C09J 121/00* (2006.01)
*C09J 133/00* (2006.01)

(86) International application number:
**PCT/JP2017/042925**

(87) International publication number:
**WO 2018/101371 (07.06.2018 Gazette 2018/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.11.2016 JP 2016232749**

(71) Applicant: **Nitto Denko Corporation**
**Ibaraki-shi, Osaka 567-8680 (JP)**

(72) Inventors:
• **ASAI, Ryoko**
**Ibaraki-shi**
**Osaka 567-8680 (JP)**

• **SHIMOKAWA, Kayo**
**Ibaraki-shi**
**Osaka 567-8680 (JP)**
• **TANI, Kensuke**
**Ibaraki-shi**
**Osaka 567-8680 (JP)**
• **KIRA, Yoshiko**
**Ibaraki-shi**
**Osaka 567-8680 (JP)**
• **OKADA, Kenichi**
**Ibaraki-shi**
**Osaka 567-8680 (JP)**

(74) Representative: **Müller-Boré & Partner**
**Patentanwälte PartG mbB**
**Friedenheimer Brücke 21**
**80639 München (DE)**

(54) **ADHESIVE AGENT COMPOSITION, ADHESIVE AGENT LAYER, AND ADHESIVE SHEET**

(57)    The present invention relates to an adhesive composition containing a base polymer, a water-absorbing material, and a moisture-curable component, wherein the moisture-curable component is contained in an unreacted state, an adhesive layer made from the adhesive composition, and an adhesive sheet including the adhesive layer.

EP 3 549 993 A1

**Description**

TECHNICAL FIELD

The present invention relates to an adhesive composition, an adhesive layer made from the adhesive composition, and an adhesive sheet including the adhesive layer.

BACKGROUND ART

Conventionally, a primer composition has been used for the purpose of waterproofing of concrete and the like. For example, Patent Literature 1 describes that a coating composition obtained by mixing a specific resin composition and a specific moisture-curable solution can be used as a primer composition having excellent close adhesiveness to a wet surface.
Further, Patent Literature 2 describes a photopolymerizable composition which can provide a moisture-curable adhesive having sufficient adhesive strength to an adherend having an uneven surface such as an inorganic material, e.g., concrete or the like, or wood by photopolymerization, and a moisture-curable adhesive sheet obtained by using this composition.

CITATION LIST

PATENT LITERATURE

Patent Literature 1: JP-A-2001-354749
Patent Literature 2: JP-A-2000-273418

SUMMARY OF INVENTION

TECHNICAL PROBLEM

However, since the coating composition described in Patent Literature 1 is used as a liquid primer composition and requires a coating operation and subsequent drying, there is a problem in view of operation efficiency.
Moreover, in Patent Literature 2, the adhesive strength to an adherend having an uneven surface such as an inorganic material, e.g., concrete or the like, or wood is investigated but the adhesive strength to a wet surface is not investigated at all.
An object of the present invention is to provide an adhesive composition which gives high adhesive force to a wet surface, particularly to a wet surface of an adherend having unevenness, an adhesive layer made from the adhesive composition, and an adhesive sheet including the adhesive layer.

SOLUTION TO PROBLEM

As a result of intensive studies in view of the above problems, the present inventors have found that the problems can be solved by an adhesive composition having the following configuration, an adhesive layer made from the adhesive composition, and an adhesive sheet including the adhesive layer, and have completed the present invention.
One aspect of the present invention relates to an adhesive composition containing a base polymer, a water-absorbing material, and a moisture-curable component, wherein the moisture-curable component is contained in an unreacted state.
In the adhesive composition, the content of the moisture-curable component may be 0.1 to 50% by weight based on all the components of the adhesive composition excluding a solvent.
In the adhesive composition, the moisture-curable component may be capable of chemically bonding to an adherend.
The adhesive composition preferably exhibits an initial elastic modulus of 400 kPa or less when forming an adhesive layer.
In the adhesive composition, the moisture-curable component may be one or more selected from an isocyanate compound and an alkoxysilyl group-containing polymer.
In the adhesive composition, the base polymer may contain an acrylic polymer or a rubber-based polymer.
In the adhesive composition, the content of the water-absorbing material may be 1 to 50% by weight based on all the components of the adhesive composition excluding a solvent.

In the adhesive composition, the water-absorbing material may be a water-absorbing polymer.

Further, one aspect of the present invention relates to an adhesive layer comprising the above-described adhesive composition.

In the adhesive layer, the water-absorbing material may be exposed at 0.5 to 80% of the surface area on a pasting surface of the adhesive layer.

Moreover, one aspect of the present invention relates to an adhesive sheet comprising the above-mentioned adhesive layer.

In the adhesive sheet, the adhesive layer may be formed on a substrate.

ADVANTAGEOUS EFFECTS OF INVENTION

The adhesive layer made from the adhesive composition and the adhesive sheet of the present invention have high adhesive force to a wet surface, particularly to a wet surface of an adherend having unevenness.

DESCRIPTION OF EMBODIMENTS

Hereinafter, embodiments of the present invention will be described in detail.

An adhesive composition according to one embodiment of the present invention is an adhesive composition containing a base polymer, a water-absorbing material, and a moisture-curable component, the moisture-curable component being contained in an unreacted state.

When an adhesive layer made from the adhesive composition according to the present embodiment or an adhesive sheet including the adhesive layer (hereinafter collectively also referred to as adhesive sheet) is pasted to a wet surface of an adherend, water on the wet surface of the adherend is first absorbed and removed by the water-absorbing material in the adhesive composition (adhesive layer) and also the adhesive sheet is pasted to the adherend at such an initial adhesive force that displacement does not occur, owing to the adhesiveness of the adhesive layer. At this time, since the water on the wet surface of the adherend is absorbed and removed by the water-absorbing material, even if the adherend has an uneven surface, the adhesive layer can well follow the uneven surface of the adherend. In addition, the unreacted moisture-curable component in the adhesive composition (adhesive layer) reacts with the water absorbed from the wet surface of the adherend or water such as the surrounding water or moisture to undergo moisture curing, and thereby, the adhesive force to the adherend is further increased. Therefore, the adhesive sheet of the present embodiment can increase the adhesive force with time even when pasted to the wet surface of the adherend, particularly to a wet-state adherend having an uneven surface, and exhibits high adhesive force. Incidentally, the case where the moisture-curable component is capable of chemically bonding to the adherend is preferred because the adhesive force to the adherend surface is further improved by the progress of the chemical bond between the moisture-curable component capable of chemically bonding to the adherend contained in an unreacted state in the adhesive composition (adhesive layer) and the adherend surface.

In the adhesive composition according to the present embodiment, the base polymer constituting the adhesive composition is not particularly limited, and known polymers used for adhesives can be used. For example, acrylic polymers, rubber-based polymers, vinyl alkyl ether-based polymers, silicone-based polymers, polyester-based polymers, polyamide-based polymers, urethane-based polymers, fluorine-based polymers, epoxy-based polymers, and the like may be mentioned. Among them, rubber-based polymers and acrylic polymers are preferable from the viewpoint of adhesiveness, and rubber-based polymers having low moisture permeability are more preferable from the viewpoint of water resistance. Incidentally, as such a polymer, only one kind may be used alone, or two or more kinds may be used in combination.

As a main monomer component constituting the acrylic polymer, a (meth) acrylic acid alkyl ester ((meth)acrylic acid alkyl ester having a linear or branched alkyl group) can be suitably used. Examples of the (meth) acrylic acid alkyl ester include (meth)acrylic acid alkyl esters having an alkyl group having 1 to 20 carbon atoms, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Among them, (meth)acrylic acid alkyl esters having an alkyl group having 1 to 14 carbon atoms are preferable, and (meth)acrylic acid alkyl esters having an alkyl group having 2 to 10 carbon atoms are more preferable. Incidentally, the above "(meth)acrylic acid ester" represents "acrylic acid ester" and/or "methacrylic acid ester", and the same shall apply in others.

In addition, as (meth)acrylic acid esters other than the above (meth)acrylic acid alkyl esters, examples thereof include (meth)acrylic acid esters having an alicyclic hydrocarbon group, such as cyclopentyl (meth)acrylate, cyclohexyl (meth)acrylate, and isobornyl (meth)acrylate, and (meth)acrylic acid esters having an aromatic hydrocarbon group, such as phenyl (meth)acrylate.

The (meth)acrylic acid esters can be used alone, or two or more kinds can be used in combination. Incidentally, since the (meth)acrylic acid ester is used as a monomer main component of the acrylic polymer, the proportion of the (meth)acrylic acid ester [especially (meth)acrylic acid alkyl ester] is, for example, preferably 60% by weight or more, and more preferably 80% by weight or more relative to the total amount of the monomer components for preparing the acrylic polymer.

In the acrylic polymer, various copolymerizable monomers such as polar group-containing monomers and polyfunctional monomers may be used as monomer components. By using a copolymerizable monomer as a monomer component, for example, the adhesive force to the adherend can be improved, or the cohesive force of the adhesive can be increased. The copolymerizable monomers can be used alone, or two or more kinds can be used in combination.

Examples of the polar group-containing monomer include carboxyl group-containing monomers such as (meth)acrylic acid, itaconic acid, maleic acid, fumaric acid, crotonic acid, and isocrotonic acid or anhydrides thereof (maleic anhydride etc.); hydroxyl group-containing monomers such as hydroxyalkyl (meth)acrylates, e.g., hydroxyethyl (meth)acrylate, hydroxypropyl (meth)acrylate, hydroxybutyl (meth)acrylate, and the like; amide group-containing monomers such as acrylamide, methacrylamide, N,N-dimethyl(meth)acrylamide, N-methylol(meth)acrylamide, N-methoxymethyl(meth)acrylamide, and N-butoxymethyl(meth)acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocyclic ring-containing vinyl monomers such as N-vinyl-2-pyrrolidone, (meth)acryloylmorpholine, in addition, N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate-based monomers such as methoxyethyl (meth)acrylate and ethoxyethyl (meth)acrylate; sulfonic acid group-containing monomers such as sodium vinylsulfonate; phosphoric acid group-containing monomers such as 2-hydroxyethyl acryloylphosphate; imide group-containing monomers such as cyclohexylmaleimide and isopropylmaleimide; isocyanate group-containing monomers such as 2-methacryloyloxyethyl isocyanate; and the like. As the polar group-containing monomer, carboxyl group-containing monomers such as acrylic acid or anhydrides thereof are suitable.

The amount of the polar group-containing monomer to be used is 30% by weight or less (e.g., 1 to 30% by weight), preferably 3 to 20% by weight based on the total amount of the monomer components for forming the acrylic polymer. When the amount of the polar group-containing monomer to be used exceeds 30% by weight, for example, there is a concern that the cohesive force of the acrylic adhesive may become too high and the tackiness of the adhesive layer may be reduced. Moreover, when the amount of the polar group-containing monomer to be used is too small (e.g., less than 1% by weight), the advantageous effects of copolymerization of these monomers are not obtained in some cases.

Examples of the polyfunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, and the like.

The amount of the polyfunctional monomer to be used is 2% by weight or less (e.g., 0.01 to 2% by weight), preferably 0.02 to 1% by weight based on the total amount of the monomer components for forming the acrylic polymer. When the amount of the polyfunctional monomer to be used exceeds 2% by weight, for example, there is a concern that the cohesive force of the adhesive may become too high and the tackiness of the adhesive layer may be reduced. Moreover, when the amount of the polyfunctional monomer to be used is too small (e.g., less than 0.01% by weight), the advantageous effects of copolymerization of these monomers are not obtained in some cases.

In addition, examples of the copolymerizable monomers other than the polar group-containing monomers and the polyfunctional monomers include vinyl esters such as vinyl acetate and vinyl propionate, aromatic vinyl compounds such as styrene and vinyltoluene, and olefins or dienes such as ethylene, butadiene, isoprene, and isobutylene; vinyl ethers such as vinyl alkyl ether; vinyl chloride; and the like.

The rubber-based polymer is not particularly limited and examples thereof include synthetic rubbers such as diene-based synthetic rubbers (e.g., isoprene rubber, styreneisoprene rubber, butadiene rubber, styrene-butadiene rubber, chloroprene rubber, etc.) and non-diene-based synthetic rubbers (e.g., butyl rubber, isobutylene rubber, ethylene propylene rubber, urethane rubber, silicone rubber, etc.), natural rubber, and the like.

Further, as polymers for a rubber modifiers, for example, there may be used polymers having low polarity such as aliphatic hydrocarbon resins such as 1,3-pentadiene-based polymers and polybutene, dicyclopentadiene-based alicyclic hydrocarbon resins, petroleum softeners (paraffinic oil, naphthenic oil, and aromatic oil).

In the case where the adhesive composition contains a polymerization initiator, a curing reaction by heat or an active energy ray using a polymerization initiator such as a thermal polymerization initiator or a photopolymerization initiator (photoinitiator) can be utilized. The polymerization initiator can be used alone, or two or more kinds can be used in combination.

Examples of the thermal polymerization initiator include azo polymerization initiators [e.g., 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride, etc.], peroxide-based polymerization initiators (e.g., dibenzoyl peroxide, tert-butyl permaleate, etc.), redox polymerization initiators, and the like. The amount of the thermal polymerization initiator to be used is not particularly limited, and may be in the range that can be conventionally used as a thermal polymerization initiator.

The photopolymerization initiator is not particularly limited, and there can be used benzoin ether-based photopolymerization initiators, acetophenone-based photopolymerization initiators, $\alpha$-ketol-based photopolymerization initiators, aromatic sulfonyl chloride-based photopolymerization initiators, photoactive oxime-based photopolymerization initiators, benzoin based photopolymerization initiators, benzil-based photopolymerization initiators, benzophenone-based photopolymerization initiators, ketal-based photopolymerization initiators, thioxanthone-based photopolymerization initiators, and the like.

Specifically, examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one, anisole methyl ether, and the like. Examples of the acetophenone-based photopolymerization initiators include 2,2-diethoxyacetophenone, 2,2-dimethoxy-2-phenylacetophenone, 1-hydroxycyclohexyl phenyl ketone, 4-phenoxydichloroacetophenone, 4-(t-butyl)dichloroacetophenone, and the like. Examples of the $\alpha$-ketol-based photopolymerization initiators include 2-methyl-2-hydroxypropiophenone, 1-[4-(2-hydroxyethyl)phenyl]-2-methylpropan-1-one, and the like. Examples of the aromatic sulfonyl chloride-based photopolymerization initiators include 2-naphthalene sulfonyl chloride and the like. Examples of the photoactive oxime-based photopolymerization initiators include 1-phenyl-1,1-propanedione-2-(o-ethoxycarbonyl)-oxime and the like.

The benzoin photopolymerization initiators include, for example, benzoin. The benzil-based photopolymerization initiators include, for example, benzil and the like. The benzophenone-based photopolymerization initiators include, for example, benzophenone, benzoylbenzoic acid, 3,3'-dimethyl-4-methoxybenzophenone, polyvinylbenzophenone, $\alpha$-hydroxycyclohexyl phenyl ketone, and the like. The ketal-based photopolymerization initiators includes, for example, benzyl dimethyl ketal and the like. The thioxanthone-based photopolymerization initiators include, for example, thioxanthone, 2-chlorothioxanthone, 2-methylthioxanthone, 2,4-dimethylthioxanthone, isopropylthioxanthone, 2,4-diisopropylthioxanthone, dodecylthioxanthone, and the like.

The amount of the photopolymerization initiator to be used is not particularly limited, and can be selected from the range of, for example, 0.01 to 5 parts by weight (preferably 0.05 to 3 parts by weight) based on 100 parts by weight of all the monomer components for forming the acrylic polymer.

At the time of activation of the photopolymerization initiator, irradiation with active energy rays is performed. Examples of such active energy rays include ionizing radiations such as alpha rays, beta rays, gamma rays, neutron rays, and electron rays, ultraviolet rays, and the like. Particularly, ultraviolet rays are preferable. Further, the irradiation energy of the active energy rays, the irradiation time thereof, and the like are not particularly limited as long as the photopolymerization initiator can be activated to generate the reaction of the monomer components.

The content of the base polymer in the adhesive composition according to the present embodiment is not particularly limited, but from the viewpoint of the initial adhesive force, based on all the components of the adhesive composition excluding the solvent, that is, when the total amount of the components of the adhesive composition excluding the solvent is regarded as 100% by weight, the content is preferably 10% by weight or more, more preferably 15% by weight or more, and still more preferably 20% by weight or more. Further, the content of the base polymer is, from the viewpoint of containing the water-absorbing material and the moisture-curable component, preferably 70% by weight or less, more preferably 60% by weight or less, and still more preferably 50% by weight or less based on all the components of the adhesive composition excluding the solvent.

In the present embodiment, the water-absorbing material refers to a material capable of absorbing and retaining water. In the adhesive composition according to the present embodiment, at the time when the adhesive sheet is pasted to the wet surface of the adherend, the water-absorbing material absorbs and retains the water on the wet surface, which interferes with the adhesion between the adhesive sheet and the adherend, and thereby the initial adhesive force to the adherend, which is required for the adhesive sheet, is well exhibited. In addition, since the water on the wet surface of the adherend is absorbed and removed by the water-absorbing material, the adhesive sheet can well follow even to an adherend having an uneven surface.

As the water-absorbing material, an organic water-absorbing material such as a water-absorbing polymer or an inorganic water-absorbing material can be used. As the water-absorbing material, only one kind may be used alone, or two or more kinds may be used in combination.

Examples of the water-absorbing polymer include polyacrylic acids, water-soluble celluloses, polyvinyl alcohols, polyethylene oxides, starches, alginic acids, chitins, polysulfonic acids, polyhydroxymethacrylates, polyvinylpyrrolidones, polyacrylamides, polyethyleneimines, polyallylamines, polyvinylamines, maleic anhydrides, copolymers thereof, and the like. As the water-absorbing polymer, only one kind may be used alone, or two or more kinds may be used in combination.

Among them, a polyacrylic acid sodium salt or a copolymer of maleic anhydride and polyisobutylene is preferable, and a copolymer of maleic anhydride and polyisobutylene is more preferable.

A commercially available product may be used as the water-absorbing polymer. As commercially available products of the water-absorbing polymers, there can be suitably used, for example, KC Flock (cellulose powder, manufactured by Nippon Paper Chemicals Co., Ltd.), Sunrose (carboxymethyl cellulose, manufactured by Nippon Paper Chemicals, Co., Ltd.), Aqualic CA (acrylic acid polymer partial sodium salt crosslinked product, manufactured by Nippon Shokubai Co., Ltd.), Acryhope (acrylic acid polymer partial sodium salt crosslinked product, manufactured by Nippon Shokubai Co., Ltd.), Sunwet (polyacrylate salt crosslinked product, manufactured by San-Dia Polymers, Ltd.), Aqua Pearl (polyacrylate salt crosslinked product, manufactured by San-Dia Polymers, Ltd.), Aqua Keep (acrylic acid polymer partial sodium salt crosslinked product, manufactured by Sumitomo Seika Chemicals Co., Ltd.), Aquacalk (modified polyalkylene oxide, manufactured by Sumitomo Seika Chemicals Co., Ltd.), KI gel (isobutylene-maleic anhydride copolymer crosslinked product, manufactured by Kuraray Co., Ltd.), and the like.

Examples of the inorganic water-absorbing material include silica gel and inorganic polymers such as Sumecton SA manufactured by Kunimine Industries Co., Ltd.

The content of the water-absorbing material in the adhesive composition according to the present embodiment is not particularly limited, but from the viewpoint of water absorbability and removability of the water of the adherend, based on all the components of the adhesive composition excluding the solvent, that is, when the total amount of the components of the adhesive composition excluding the solvent is regarded as 100% by weight, the content is preferably 0.1% by weight or more, more preferably 0.5% by weight or more, and still more preferably 1% by weight or more. In addition, the content of the water-absorbing material is, from the viewpoint of adhesive force after moisture curing, preferably 50% by weight or less, more preferably 40% by weight or less, and still more preferably 30% by weight or less based on all the components of the adhesive composition excluding the solvent.

In the present embodiment, the moisture-curable component is a component having a property (moisture curability) that causes a curing reaction due to the presence of water (water and moisture). For example, the moisture-curable component includes a resin or a compound which has, in the molecule, one or more hydrolyzable reactive groups or functional groups that start the reaction with water, and which starts curing with water (water or moisture) in the surroundings such as the air.

The moisture-curable component to be used in the adhesive composition of the present embodiment has moisture curability. The moisture-curable component is contained in the adhesive composition in an unreacted state. When an adhesive sheet including an adhesive layer made from the adhesive composition of the present embodiment is pasted to an adherend, the moisture-curable component itself in an unreacted state is cured with the water absorbed from the wet surface or the water such as surrounding water or moisture and thereby adhesiveness is further improved. Moreover, the moisture-curable component is preferably a component capable of chemically bonding to the adherend to which the adhesive sheet is pasted. In such a case, the adhesiveness is further improved by the progress of chemical bonding between the moisture-curable component in an unreacted state and the adherend.

As the moisture-curable component to be used in the present embodiment, isocyanate compounds, alkoxysilyl group-containing polymers, cyanoacrylate-based compounds, urethane-based compounds, and the like may be mentioned. Among them, isocyanate compounds and alkoxysilyl group-containing polymers are preferable in view of compatibility and curing speed. As the moisture-curable component, only one kind may be used alone, or two or more kinds may be used in combination.

An isocyanate compound (isocyanate) is hydrolyzed in the presence of water to form an amine, and curing is achieved by the reaction of the isocyanate with the amine to form a urea bond. In addition, an isocyanate compound can form a chemical bond with a hydroxyl group, an amino group, a carboxyl group, and the like on the surface of an adherend.

As the isocyanate compound, for example, there can be used one or more selected from toluene diisocyanates such as Polyflex PR, Polygrout M-2, and Polygrout S-200 manufactured by Daiichi Kogyo Seiyaku Co., Ltd., Coronate L manufactured by Tosoh Corporation, and xylylene diisocyanates such as Takenate M-605NE and Takenate D-120N manufactured by Mitsui Chemicals, Inc., hexamethylene diisocyanates such as Takenate M-63 IN manufactured by Mitsui Chemicals, Inc., Duranate MFA-75X manufactured by Asahi Kasei Corporation, and Coronate HL manufactured by Tosoh Corporation.

An alkoxysilyl group-containing polymer is hydrolyzed in the presence of water to form a silanol and is cured through condensation (crosslinking). In addition, an alkoxysilyl group-containing polymer can form a strong chemical bond through a dehydration condensation reaction with a hydroxyl group on the surface of an adherend.

As the alkoxysilyl group-containing polymer, for example, there can be used one or more selected from linear dimethoxy group-both terminal type ones such as Silyl SAX220 and Silyl SAT350, linear dimethoxy group-one terminal type ones such as Silyl SAT145, linear trimethoxy group-both terminal type ones such as Silyl SAX510 or Silyl SAT580, branched dimethoxy group-terminal type ones such as Silyl SAT400, and acrylic modified type ones such as Silyl MA440, Silyl MA903, and Silyl MA904 manufactured by Kaneka Corporation.

The content of the moisture-curable component in the adhesive composition according to the present embodiment is not particularly limited, but from the viewpoint of obtaining high adhesive force, based on all the components of the adhesive composition excluding the solvent, that is, when the total amount of the components of the adhesive composition excluding the solvent is regarded as 100% by weight, the content is preferably 0.1% by weight or more, more preferably 0.2% by weight or more, and still more preferably 0.4% by weight or more. In addition, the content of the moisture-curable component is, from the viewpoint of product life and pot life, preferably 50% by weight or less, more preferably 45% by weight or less, and still more preferably 40% by weight or less based on all the components of the adhesive composition excluding the solvent.

The adhesive composition according to the present embodiment may contain a tackifier (tackifying agent) for the purpose of adjusting the elastic modulus and imparting tackiness at the time of initial adhesion. Examples of the tackifier include polybutenes, rosin-based resins, terpene-based resins, petroleum-based resins (e.g., petroleum-based aliphatic hydrocarbon resins, petroleum-based aromatic hydrocarbon resins, and petroleum-based aliphatic/aromatic copolymerized hydrocarbon resins), petroleum-based alicyclic hydrocarbon resins (hydrogenated ones of aromatic hydrocarbon resins), etc.), coumarone-based resins, and the like. From the viewpoint of compatibility, preferred are petroleum-based resins and rosin-based resins. As the tackifier, one kind may be used or two or more kinds may be used in combination.

The content of the tackifier in the case where it is contained in the adhesive composition is, from the viewpoint of decreasing the elastic modulus, based on all the components of the adhesive composition excluding the solvent, that is, when the total amount of the components of the adhesive composition excluding the solvent is regarded as 100% by weight, the content is preferably 1% by weight or more, and more preferably 5% by weight or more. In addition, the content of the tackifier is, from the viewpoint of imparting an appropriate cohesive force to the adhesive, preferably 70% by weight or less, more preferably 65% by weight or less, and still more preferably 60% by weight or less based on all the components of the adhesive composition excluding the solvent.

To the adhesive composition of the present embodiment, in the ranges where the advantageous effects of the present invention are not inhibited, additives usually added to an adhesive composition, such as viscosity modifiers, release modifiers, plasticizers, softeners, fillers, colorants (pigment, dye, etc.), antiaging agents, surfactants, leveling agents, antifoaming agents, light stabilizers, and the like may be further added.

Examples of the filler include inorganic fillers such as talc, titanium oxide, calcium oxide, magnesium oxide, zinc oxide, titanium oxide, calcium carbonate, carbon, silica, clay, mica, barium sulfate, whiskers, magnesium hydroxide, and the like.

The content of the filler is, from the viewpoint of rough surface adhesiveness, preferably 80% by weight or less and more preferably 70% by weight or less based on all the components of the adhesive composition excluding the solvent.

Moreover, various common solvents can be used as a solvent to be utilized for an adhesive composition. Examples of the solvents include organic solvents, e.g., esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone; and the like. The solvents may be used alone, or two or more kinds may be used in combination.

In the adhesive composition of the present embodiment, the elastic modulus (initial elastic modulus) of the adhesive layer when forming an adhesive layer (before moisture curing) is preferably 400 kPa or less, more preferably 300 kPa or less, and still more preferably 200 kPa or less. When the initial elastic modulus is 400 kPa or less, good followability can be exhibited even to an adherend having an uneven surface. In addition, the water absorbency of the water-absorbing material is well exhibited without inhibiting swelling at the time when the water-absorbing material absorbs water on the wet surface of the adherend. Further, in order to form the adhesive layer satisfactorily, the initial elastic modulus is preferably 0.1 kPa or more, more preferably 0.5 kPa or more, and further preferably 1 kPa or more, and particularly preferably 10 kPa or more.

Here, when the adhesive layer is formed, the initial elastic modulus of the adhesive layer can be calculated from the stress-strain curve measured when a sample is prepared by making the adhesive layer into a string shape and is stretched at a speed of 50 mm/min using a tensile tester (AG-IS manufactured by Shimadzu Corporation).

In addition, an adhesive composition according to one embodiment of the present invention is an adhesive composition having a 90° peel adhesive force of 5 N/25 mm or more when it is measured under the following measurement conditions.

(Measurement conditions)

An adhesive layer having a thickness of 150 $\mu$m, which is made of the above-mentioned adhesive composition,

7

is formed on one side of a substrate having a thickness of 25 $\mu$m and a width of 25 mm, which is made of polyethylene terephthalate, to prepare an adhesive sheet having a width of 25 mm. The adhesive sheet is crimped to the surface of a slate plate having a moisture content of 25% by reciprocating a 2 kg roller once, and is subsequently immersed in water and allowed to stand at 23°C for 24 hours. Thereafter, the slate plate to which the adhesive sheet has been pasted is taken out from the water, and 90° peel adhesive force (N/25 mm) to the slate plate is measured at a peeling temperature of 23°C and a peeling speed of 100 mm/min.

Hereinafter, the measurement conditions of the above-mentioned 90° peel adhesive force will be described in more detail.

First, an adhesive layer having a thickness of 150 $\mu$m, which is composed of an adhesive composition to be measured, is formed on one side of a substrate having a thickness of 25 $\mu$m and a width of 25 mm, which is made of polyethylene terephthalate (PET), to prepare an adhesive sheet (test piece) having a width of 25 mm.

Further, a slate standard plate, a product name "JIS A5430 (FB)" manufactured by Nippon Test Panel Co., Ltd. (hereinafter also referred to as a slate plate), which has a thickness of 3 mm, a width of 30 mm, and a length of 125 mm, is prepared. The glossy surface of this slate plate is used. The slate plate is dried at 130°C for 1 hour, and the weight of the slate plate at this point is defined as "weight of slate plate before immersion in water". Subsequently, in a state where the prepared slate plate is immersed in water, degassing is performed for 1 hour with an ultrasonic degassing apparatus (BRANSON 3510 manufactured by Yamato Scientific Co., Ltd.), allowed to stand overnight, and then taken out from water. The weight of the slate plate at this point is defined as "weight of slate plate after immersion in water and degassing". Thus, a slate plate having a moisture content of 25% (% by weight) is prepared.

Here, the moisture content of the slate plate can be calculated as follows.

$$\text{Moisture content of slate plate (\% by weight)} = [\{(\text{Weight of slate plate after immersion in water and degassing}) - (\text{Weight of slate plate before immersion in water})\}/(\text{Weight of slate plate before immersion in water})] \times 100$$

Subsequently, immediately after the prepared adhesive sheet (test piece) having a width of 25 mm is crimped and pasted on the surface (wet surface) of the slate plate having a moisture content of 25% by reciprocating a 2 kg roller once, the sheet is immersed in water and allowed to stand at 23°C for 24 hours. Thereafter, the slate plate to which the adhesive sheet (test piece) has been pasted is taken out from the water, and 90° peel adhesive force (N/25 mm) at a peeling temperature of 23°C and a peeling speed of 100 mm/min to the slate plate is measured using a tensile tester (Technograph TG-1kN manufactured by Minebea Inc.).

The above-mentioned 90° peel adhesive force is preferably 5 N/25 mm or more, more preferably 6 N/25 mm or more, and still more preferably 8 N/25 mm or more. When the 90° peel adhesive force is 5 N/25 mm or less, the adhesive force may be low. Therefore, after the adhesive is pasted to an adherend, there is a possibility that water and air bubbles that have infiltrated from the adherend side may generate a gap between the adherend and the adhesive until moisture curing in water is completed and also the adhesive may peel off the adherend.

In addition, an adhesive composition according to one embodiment of the present invention is an adhesive composition having a 90° peel adhesive force of 5 N/25 mm or more when measured under the following measurement conditions.

(Measurement conditions)

An adhesive layer having a thickness of 150 $\mu$m, which is made of the above-mentioned adhesive composition, is formed on one side of a substrate having a thickness of 25 $\mu$m and a width of 25 mm, which is made of polyethylene terephthalate, to prepare an adhesive sheet having a width of 25 mm. After the sheet is crimped to the surface of a slate plate having a moisture content of 12% by reciprocating a 2 kg roller once, the sheet is immersed in water and allowed to stand at 23°C for 24 hours. Thereafter, the slate plate to which the adhesive sheet has been pasted is taken out from the water, and 90° peel adhesive force (N/25 mm) at a peeling temperature of 23°C and a peeling speed of 100 mm/min to the slate plate is measured.

Hereinafter, the measurement conditions of the above-mentioned 90° peel adhesive force will be described in more detail.

First, an adhesive layer having a thickness of 150 $\mu$m, which is composed of an adhesive composition to be measured, is formed on one side of a substrate having a thickness of 25 $\mu$m and a width of 25 mm, which is made of polyethylene terephthalate (PET), to prepare an adhesive sheet (test piece) having a width of 25 mm.

Further, a slate standard plate, a product name "JIS A5430 (FB)" manufactured by Nippon Test Panel Co., Ltd. (hereinafter also referred to as a slate plate), which has a thickness of 3 mm, a width of 30 mm, and a length of 125 mm, is prepared. The glossy surface of this slate plate is used. The weight of the slate plate at this point is defined as "weight of slate plate before immersion in water". Subsequently, in a state where the prepared slate plate is immersed in water, degassing is performed for 1 hour with an ultrasonic degassing apparatus (BRANSON 3510 manufactured by Yamato Scientific Co., Ltd.), allowed to stand overnight, and then taken out from water. The weight of the slate plate at this point is defined as "weight of slate plate after immersion in water and degassing". Thus, a slate plate having a moisture content of 12% (% by weight) is prepared.

Here, the moisture content of the slate plate can be calculated as follows.

$$\text{Moisture content of slate plate (\% by weight)} = [\{(\text{Weight of slate plate after immersion in water and degassing)-(Weight of slate plate before immersion in water)}\}/(\text{Weight of slate plate before immersion in water})] \times 100$$

Subsequently, immediately after the prepared adhesive sheet (test piece) having a width of 25 mm is crimped and pasted on the surface (wet surface) of the slate plate having a moisture content of 12% by reciprocating a 2 kg roller once, the sheet is immersed in water and allowed to stand at 23°C for 24 hours. Thereafter, the slate plate to which the adhesive sheet (test piece) has been pasted is taken out from the water, and 90° peel adhesive force (N/25 mm) at a peeling temperature of 23°C and a peeling speed of 100 mm/min to the slate plate is measured using a tensile tester (Technograph TG-1kN manufactured by Minebea Inc.).

The above-mentioned 90° peel adhesive force is preferably 5 N/25 mm or more, more preferably 6 N/25 mm or more, and still more preferably 8 N/25 mm or more. When the 90° peel adhesive force is 5 N/25 mm or less, the adhesive force may be low. Therefore, after the adhesive is pasted to an adherend, there is a possibility that water and air bubbles that have infiltrated from the adherend side may generate a gap between the adherend and the adhesive until moisture curing in water is completed and also the adhesive may peel off the adherend.

An adhesive layer of the present embodiment is formed using the above-mentioned adhesive composition. The formation method thereof is not particularly limited, but a known method can be adopted, and the formation can be performed in accordance with the following method for producing the adhesive sheet. Incidentally, the preferable range of the amount of each component in the adhesive layer is the same as the preferable range of the amount of each component of the adhesive composition excluding the solvent.

The adhesive layer can be obtained, for example, in the form of an adhesive sheet by applying the adhesive composition to a substrate to be mentioned later using a known coating method and drying the composition. Moreover, after the adhesive composition is applied to a surface having releasability and dried or cured to thereby form an adhesive layer on the surface, the adhesive layer may be pasted to a non-releasable substrate and then transferred thereto. The method for applying the adhesive composition to the substrate is not particularly limited, and the application can be performed using, for example, a gravure roll coater, a reverse roll coater, a kiss roll coater, a dip roll coater, a bar coater, a knife coater, a spray coater, a fountain die coater, a closed edge die coater, or the like. In addition, a solvent-less coating method such as kneading-extrusion coating may be applied.

Further, the adhesive layer may be formed by applying the adhesive composition on a release sheet (which may be a sheet-like substrate provided with a release surface).

The thickness of the adhesive layer after drying is not particularly limited, but is preferably 5 to 1000 μm, and more preferably 10 to 500 μm from the viewpoint of exhibiting good followability to an adherend having an uneven surface. The drying temperature may be, for example, 50 to 150°C.

At the surface of the adhesive layer to be pasted to the adherend (pasting surface), the water-absorbing material is exposed at preferably 0.5 to 80% (more preferably 1 to 70%) of the surface area of the pasting surface. When the ratio of the water-absorbing material to the surface area of the pasting surface of the adhesive layer is 0.5% or more, the water on the wet surface of the adherend can be absorbed well. Moreover, when the ratio of the water-absorbing material to the surface area of the pasting surface of the adhesive layer is 80% or less, the adhesive layer can be well adhered to the adherend.

An adhesive sheet of the present embodiment includes the above-described adhesive layer.

The adhesive sheet of the present embodiment may be an adhesive sheet with a substrate in a form having an adhesive layer on one side or both sides of a sheet-like substrate (support), or may be a substrate-less adhesive sheet in a form where the adhesive layer is held by a release sheet. The concept of the adhesive sheet as referred to herein may include those referred to as an adhesive tape, an adhesive label, an adhesive film, and the like.

Incidentally, the adhesive layer is typically formed continuously, but is not limited to such a form, and may be, for example, an adhesive layer formed in a regular or random pattern, such as dot-like or stripe-like one. Further, the adhesive sheet of the present embodiment may be roll-shaped one or sheet-shaped one. Alternatively, it may be an adhesive sheet in a form where it is further processed into various shapes.

Examples of the material that forms the substrate include polyolefin-based films of polyethylene, polypropylene, ethylene/propylene copolymer, and the like; polyester-based films of polyethylene terephthalate and the like; plastic films of polyvinyl chloride and the like; and paper such as kraft paper and Japanese paper; cloths such as cotton cloth and Sufu (spun rayon) cloth; nonwoven fabrics such as polyester nonwoven fabric and vinylon nonwoven fabric; and metal foils. Also, the thickness of the substrate is not particularly limited.

The plastic films may be unstretched films or stretched (uniaxially stretched or biaxial stretched) films. In addition, the surface of the substrate on which the adhesive layer is provided may be subjected to surface treatment such as application of a primer, corona discharge treatment, or the like.

In the present embodiment, the adhesive sheet may be perforated to provide a through hole. In this way, at the time when the adhesive sheet is attached to an adherend, since water on the wet surface of the adherend can be released to the back side (opposite to the pasted surface) of the adhesive sheet through the through hole, more water on the wet surface of the adherend can be removed.

In the adhesive sheet of the present embodiment, the adhesive layer may be protected with a release liner (separator, release film) until the time of use. In addition, the protection with the release liner is also useful for maintaining the unreacted state of the unreacted moisture-curable component in the adhesive composition (adhesive layer).

As the release liner, a conventional release paper or the like can be used, and is not particularly limited. For example, a substrate having a release-treated layer, a low adhesive substrate composed of a fluorine-based polymer, a low adhesive substrate composed of a nonpolar polymer, or the like can be used. Examples of the substrate having a release-treated layer include plastic films, paper, and the like which have been surface-treated with a release treatment agent such as silicone-based one, long chain alkyl-based one, fluorine-based one, or molybdenum sulfide. Examples of the fluorine-based polymer of the low adhesive substrate composed of a fluorine-based polymer include polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer, and the like. Examples of the nonpolar polymer of the low-adhesive substrate composed of a nonpolar polymer include olefin-based resins (e.g., polyethylene, polypropylene, etc.), and the like. Incidentally, the release liner can be formed by a known or conventional method. In addition, the thickness and the like of the release liner are not particularly limited.

In the adhesive composition according to the present embodiment, the adhesive layer made from the adhesive composition, or the adhesive sheet including the adhesive layer, the moisture-curable component is contained in an unreacted state. Here, the unreacted state indicates a state where a curing reaction is not generated by water (water or moisture). In the present embodiment, all of the moisture-curable component is preferably in an unreacted state, but a part of the moisture-curable component may be in a reacted state as long as the advantageous effects of the present invention are exhibited. This case is also included in the case where the moisture-curable component in the present embodiment is contained in an unreacted state.

The ratio (unreacted ratio) of the unreacted moisture-curable component in the adhesive composition of the moisture curing component can be measured as follows, for example, in the case of using an isocyanate compound as the moisture-curable component.

First, the ratio of the absorbance at 2275 $cm^{-1}$ derived from the isocyanate group and the absorbance at 2250-2255 $cm^{-1}$ derived from the methylene group of the base polymer obtained from the infrared spectroscopic measurement of the adhesive sheet (adhesive layer) immediately after the preparation is calculated. Here, the absorbance ratio is the ratio of the absorbance derived from the above-mentioned isocyanate group to the absorbance derived from the above-mentioned methylene group (the absorbance derived from the isocyanate group/the absorbance derived from the methylene group). In addition, the absorbance ratio obtained from the infrared spectroscopic measurement of the adhesive sheet (adhesive layer) immediately before pasting is similarly calculated, and the unreacted ratio of the moisture-curable component (isocyanate compound) is calculated from the change ratio thereof. Specifically, it is calculated from the following relational expression.

$$\text{Unreacted ratio of moisture-curable component (isocyanate compound) (\%)} =$$
$$\{(\text{Absorbance ratio of adhesive sheet immediately before pasting})/(\text{Absorbance ratio of}$$
$$\text{adhesive sheet immediately after preparation})\} \times 100$$

When an isocyanate compound is used as the moisture-curable component, depending on the combination of the isocyanate compound and the base polymer, the base polymer may be previously crosslinked with a part of the isocyanate compound. In such a manner, the adhesive force can be improved in some cases.

With regard to the adhesive composition, the adhesive layer, and the adhesive sheet (adhesive composition and the like) of the present embodiment, in order to maintain the unreacted state of the unreacted moisture-curable component in the adhesive composition and the like, it is preferable to reduce or block the influence of surrounding water (water component and moisture). For example, the adhesive sheet of the present embodiment may be packaged in a suitable package. Examples of the material of the package include an aluminum-made moisture-proof bag and the like, but the material is not limited thereto. Further, the atmosphere inside the package may be the air, but may be replaced by an inert gas such as nitrogen or argon. In addition, a desiccant such as silica gel may be also packaged inside the package.

An adherend to which the adhesive sheet of the present embodiment is to be pasted is not particularly limited, but one capable of chemically bonding to the moisture-curable component in an unreacted state in the adhesive composition (adhesive layer) is preferable. For example, in addition to concrete, mortar, asphalt, metal, wood, tiles, and plastic materials such as a coated surface and inner wall of a bathroom, skin, bone, teeth, inside of a living body, and the like may be mentioned.

EXAMPLES

Hereinafter, embodiments of the present invention will be described in more detail using Examples.

Examples 1 to 6 and Comparative Examples 1 to 3

<Preparation of Adhesive Sheet>

(Example 1)

A solution of a copolymer (acrylic polymer 1) of 98 parts by weight of 2-ethylhexyl acrylate and 2 parts by weight of acrylic acid diluted with ethyl acetate as a solvent was prepared.

Into the solution of this acrylic polymer 1 were blended an isocyanate compound in an unreacted state (TAKENATE M-631N manufactured by Mitsui Chemicals, Inc.) as a moisture-curable component, a water-absorbing material (KI-GEL 201K-F2 manufactured by Kuraray Trading Co., Ltd.), and a tackifier (liquid completely hydrogenated rosin methyl ester resin, M-HDR manufactured by Maruzen Petrochemical Co., Ltd.) so that the proportions of the respective components relative to the total amount of the components of the adhesive composition excluding the solvent might become the proportions described in Table 1, and thereby a coating liquid of the adhesive composition was prepared.

As a release liner, a polyester-made release film (trade name "Diafoil MRF", thickness of 38 $\mu$m, manufactured by Mitsubishi Polyester Corporation) having a release surface subjected to release treatment on one side was prepared. The coating liquid of the adhesive composition was applied to the release surface of the release liner, dried at 80°C for 5 minutes, and then further dried at 130°C for 30 minutes to form an adhesive layer having a thickness of 150 $\mu$m. The other surface of the adhesive layer formed on the above release liner was pasted to a substrate film having a thickness of 25 $\mu$m to produce a single-sided adhesive sheet. As the substrate film, a PET film (resin film) manufactured by Toray Industries, Inc., a trade name "Lumirror S-10" was used. The adhesive sheet produced in this manner was cut to be a size of a width of 25 mm and a length of 10 cm, and 90° peel adhesive force measurement to be mentioned later was performed. Incidentally, in order to maintain the unreacted state of the moisture-curable component, the adhesive sheet produced in Example 1 was sealed together with silica gel in a moisture-proof bag made of aluminum until the adhesive force measurement to be mentioned later.

The same adhesive sheet as described above may be also formed by applying and drying the coating the adhesive composition to a PET film so that the thickness after drying be 150 $\mu$m to form an adhesive layer and subsequently laminating a release liner on the adhesive layer.

(Example 2)

An adhesive sheet of Example 2 was produced in the same manner as in Example 1 except that an isocyanate compound in an unreacted state (Takenate D120 manufactured by Mitsui Chemicals, Inc.) was used as a moisture-curable component and the blending ratio was changed so that the proportions of the respective components relative to the total amount of the components of the adhesive composition excluding the solvent might become the proportions described in Table 1. Incidentally, in order to maintain the unreacted state of the moisture-curable component, the adhesive sheet produced in Example 2 was sealed together with silica gel in a moisture-proof bag made of aluminum until the adhesive force measurement to be mentioned later.

(Example 3)

An adhesive sheet of Example 3 was produced in the same manner as in Example 1 except that an isocyanate compound in an unreacted state (Coronate HL manufactured by Tosoh Corporation) was used as a moisture-curable component and the blending ratio was changed so that the proportions of the respective components relative to the total amount of the components of the adhesive composition excluding the solvent might become the proportions described in Table 1. Incidentally, in order to maintain the unreacted state of the moisture-curable component, the adhesive sheet produced in Example 3 was sealed together with silica gel in a moisture-proof bag made of aluminum until the adhesive force measurement to be mentioned later.

(Example 4)

An adhesive sheet of Example 4 was produced in the same manner as in Example 1 except that an isocyanate compound in an unreacted state (Duranate MFA-75 manufactured by Asahi Kasei Corporation) was used as a moisture-curable component and the blending ratio was changed so that the proportions of the respective components relative to the total amount of the components of the adhesive composition excluding the solvent might become the proportions described in Table 1. Incidentally, in order to maintain the unreacted state of the moisture-curable component, the adhesive sheet produced in Example 4 was sealed together with silica gel in a moisture-proof bag made of aluminum until the adhesive force measurement to be mentioned later.

(Example 5)

An adhesive sheet of Example 5 was produced in the same manner as in Example 1 except that an isocyanate compound in an unreacted state (Coronate L manufactured by Tosoh Corporation) was used as a moisture-curable component and the blending ratio was changed so that the proportions of the respective components relative to the total amount of the components of the adhesive composition excluding the solvent might become the proportions described in Table 1. Incidentally, in order to maintain the unreacted state of the moisture-curable component, the adhesive sheet produced in Example 5 was sealed together with silica gel in a moisture-proof bag made of aluminum until the adhesive force measurement to be mentioned later.

(Example 6)

An adhesive sheet of Example 6 was produced in the same manner as in Example 1 except that a solution containing an acrylic polymer 2 in which a copolymer of 100 parts by weight of butyl acrylate and 5 parts by weight of acrylic acid was diluted with ethyl acetate as a solvent was prepared as a solution containing a base polymer, an alkoxysilyl group-containing polymer in an unreacted state (Silyl SAX510 and Silyl SAT145 manufactured by Kaneka Corporation) and an isocyanate compound in an unreacted state (Coronate L manufactured by Tosoh Corporation) were used as moisture-curable components, Haritack PCJ (polymerized rosin ester, manufactured by Harima Chemicals, Inc.) was used as a tackifier, and the blending ratio was changed so that the proportions of the respective components relative to the total amount of the components of the adhesive composition excluding the solvent might become the proportions described in Table 1. Incidentally, in order to maintain the unreacted state of the moisture-curable component, the adhesive sheet produced in Example 6 was sealed together with silica gel in a moisture-proof bag made of aluminum until the adhesive force measurement to be mentioned later.

(Comparative Example 1)

A solution of an acrylic polymer 2 of 100 parts by weight of butyl acrylate and 5 parts by weight of acrylic acid diluted with ethyl acetate as a solvent was prepared as a solution containing a base polymer.

Into the solution was blended an isocyanate compound in an unreacted state (Coronate L manufactured by Tosoh Corporation) as a moisture-curable component so that the proportions of respective components relative to the total amount of the components of the adhesive composition excluding the solvent might become the proportions described in Table 1, and thereby a coating liquid of the adhesive composition was prepared. Incidentally, in the adhesive composition of the present Comparative Example, a water-absorbing material and a tackifier were not used.

As a release liner, a polyester-made release film (trade name "Diafoil MRF", thickness of 38 μm, manufactured by Mitsubishi Polyester Corporation) having a release surface subjected to release treatment on one side was prepared. The coating liquid of the adhesive composition was applied to the release surface of the release liner, dried at 80°C for 5 minutes, and then further dried at 130°C for 30 minutes to form an adhesive layer having a thickness of 150 μm. The other surface of the adhesive layer formed on the above release liner was pasted to a substrate film having a thickness of 25 μm to produce a single-sided adhesive sheet. As the substrate film, a PET film (resin film) manufactured by Toray Industries, Inc., a trade name "Lumirror S-10" was used. The adhesive sheet produced in this manner was cut to be a size of a width of 25 mm and a length of 10 cm. Furthermore, the produced adhesive sheet was aged for 48 hours under an environment of 40°C/90% RH without moisture-proof packaging and thereby all the moisture-curable components in the adhesive composition (adhesive layer) were brought into a reacted state. Thereafter, 90° peel adhesive force measurement to be mentioned later was performed.

(Comparative Example 2)

An adhesive sheet of Comparative Example 2 was produced in the same manner as in Example 1 except that an isocyanate compound in an unreacted state (Takenate M-631 manufactured by Mitsui Chemicals, Inc.) was used as a moisture-curable component and the blending ratio was changed so that the proportions of the respective components relative to the total amount of the components of the adhesive composition excluding the solvent might become the proportions described in Table 1. Furthermore, the produced adhesive sheet was aged for 48 hours under an environment of 40°C/90% RH without moisture-proof packaging and thereby all the moisture-curable components in the adhesive composition (adhesive layer) were brought into a reacted state. Thereafter, 90° peel adhesive force measurement to be mentioned later was performed.

(Comparative Example 3)

An adhesive sheet of Comparative Example 3 was produced in the same manner as in Example 1 except that an isocyanate compound in an unreacted state (Takenate M-631 manufactured by Mitsui Chemicals, Inc.) was used as a moisture-curable component and the blending ratio was changed so that the proportions of the respective components relative to the total amount of the components of the adhesive composition excluding the solvent might become the proportions described in Table 1. Incidentally, in the adhesive composition of the present Comparative Example, a water-absorbing material was not used. In addition, in order to maintain the unreacted state of the moisture-curable component, the adhesive sheet produced in Comparative Example 3 was sealed together with silica gel in a moisture-proof bag made of aluminum until the adhesive force measurement to be mentioned later.

<Measurement of 90° Peel Adhesive Force to Wet Surface>

A slate standard plate, a product name "JIS A5430 (FB)" manufactured by Nippon Test Panel Co., Ltd. (hereinafter also referred to as a slate plate), which had a thickness of 3 mm, a width of 30 mm, and a length of 125 mm, was prepared. The glossy surface of this slate plate was used. The weight of the slate plate was measured and defined as "weight of slate plate before immersion in water".

Subsequently, in a state where the prepared slate plate was immersed in water, degassing was performed for 1 hour with an ultrasonic degassing apparatus (BRANSON 3510 manufactured by Yamato Scientific Co., Ltd.), allowed to stand overnight, and then taken out from water. The weight of the slate plate at this point was measured and defined as "weight of slate plate after immersion in water and degassing".

When the moisture content of the slate plate was calculated from the following expression based on the measured "weight of the slate plate before immersion in water" and "weight of the slate plate after immersion in water and degassing", the content was 12% (% by weight).

$$\text{Moisture content of slate plate (\% by weight)} = [\{(\text{Weight of slate plate after immersion in water and degassing})-(\text{Weight of slate plate before immersion in water})\}/(\text{Weight of slate plate before immersion in water})] \times 100$$

Subsequently, immediately after an adhesive sheet (test piece) from which the release liner had been peeled off was crimped and pasted on the surface (wet surface) of the slate plate having a moisture content of 12% by reciprocating a 2 kg roller once, the sheet was immersed in water and allowed to stand at 23°C for 24 hours. Thereafter, the slate plate to which the adhesive sheet (test piece) had been pasted was taken out from the water, and 90° peel adhesive force (N/25 mm) at a peeling temperature of 23°C and a peeling speed of 100 mm/min to the slate plate was measured using a tensile tester (Technograph TG-1kN manufactured by Minebea Inc.). Table 1 shows results thereof.

Incidentally, when the measured value of the 90° peel adhesive force (N/25 mm) is 5N/25 mm or more, the adhesive force to the wet surface can be evaluated high.

(Measurement of Initial Elastic Modulus)

A sample was prepared by making an adhesive layer made from the adhesive composition into a string shape, and for this sample, using a tensile tester (AG-IS manufactured by Shimadzu Corporation), the initial elastic modulus of the adhesive layer was calculated from the stress-strain curve measured when the sample was stretched at a rate of 50 mm/min. More specifically, it was calculated by the following method. Table 1 shows results thereof.

As a release liner, a polyester-made release film (trade name "Diafoil MRF", thickness of 38 $\mu$m, manufactured by Mitsubishi Polyester Corporation) having a release surface subjected to release treatment on one side was prepared. A coating liquid of the adhesive composition was applied to the release surface of the release liner, dried at 70°C for 5 minutes, and then dried at 120°C for 10 minutes to form an adhesive layer having a thickness of 150 $\mu$m. The other side of the polymer layer formed on the above release liner was pasted to the release surface of the same release liner as the release liner that had already been pasted, and thus a sheet of the adhesive layer whose both surfaces were protected with the release liners was produced.

The resulting sheet of the adhesive layer was cut into a size of a width of 30 mm and a length of 20 mm, and only the adhesive layer was rolled in the longitudinal direction to form a string shape and thus a sample having an initial cross-sectional area of 3 mm$^2$ was formed. The initial elastic modulus thereof was calculated from a stress-strain curve measured when the sample was set at an initial length of 10 mm and then stretched at a tensile rate of 50 mm/min using a tensile tester (AG-IS manufactured by Shimadzu Corporation).

[Table 1]

EP 3 549 993 A1

Table 1

| | Adhesive composition | | | | | | | 90° peel adhesive force (N/25 mm) | Initial elastic modulus (kPa) |
|---|---|---|---|---|---|---|---|---|---|
| | Base polymer (% by weight) | Moisture-curable component (% by weight) | | | Reaction state of moisture-curable component | Water-absorbing material (% by weight) | Tackifier (% by weight) | Filler (% by weight) | |
| Example 1 | Acrylic polymer 1 | Takenate M-631N | | | Unreacted state | KI gel | M-HDR | - | 18.3 | 8.7 |
| | 37.3 | 2.3 | | | | 23.1 | 37.3 | - | | |
| Example 2 | Acrylic polymer 1 | Takenate D120 | | | Unreacted state | KI gel | M-HDR | - | 19.3 | 4.9 |
| | 38.0 | 0.95 | | | | 23.1 | 38.0 | - | | |
| Example 3 | Acrylic polymer 1 | Coronate HL | | | Unreacted state | KI gel | M-HDR | - | 18.8 | 4.8 |
| | 38.0 | 0.84 | | | | 23.1 | 38.0 | - | | |
| Example 4 | Acrylic polymer 1 | Duranate MFA-75 | | | Unreacted state | KI gel | M-HDR | - | 20.0 | 9.0 |
| | 38.1 | 0.76 | | | | 23.1 | 38.1 | - | | |
| Example 5 | Acrylic polymer 1 | Coronate L | | | Unreacted state | KI gel | M-HDR | - | 9.8 | 0.6 |
| | 38.1 | 0.76 | | | | 23.1 | 38.1 | - | | |
| Example 6 | Acrylic polymer 2 | SAX510 | SAT145 | Coronate L | Unreacted state | KI gel | Haritack PCJ | - | 21.8 | 14.9 |
| | 39.8 | 13.9 | 6.0 | 0.4 | | 24.0 | 15.9 | - | | |
| Comparative Example 1 | Acrylic polymer 2 | Coronate L | | | Reacted state | - | - | - | 0.3 | 36.4 |
| | 99.0 | 1.0 | | | | - | - | - | | |

| | Adhesive composition | | | | | | 90° peel adhesive force (N/25 mm) | Initial elastic modulus (kPa) |
|---|---|---|---|---|---|---|---|---|
| | Base polymer (% by weight) | Moisture-curable component (% by weight) | Reaction state of moisture-curable component | Water-absorbing material (% by weight) | Tackifier (% by weight) | Filler (% by weight) | | |
| Comparative Example 2 | Acrylic polymer 1 | Takenate M-631 | Reacted state | KI gel | M-HDR | - | 0.4 | 58.9 |
| | 37.3 | 2.3 | | 23.1 | 37.3 | - | | |
| Comparative Example 3 | Acrylic polymer 1 | Takenate M-631 | Unreacted state | - | M-HDR | - | 3.9 | 5.3 |
| | 48.5 | 3.0 | | - | 48.5 | - | | |

EP 3 549 993 A1

In the adhesive sheet of Comparative Example 1 in which the moisture-curable component in the adhesive composition (adhesive layer) was in a reacted state before pasting and the water-absorbing material was not contained in the adhesive composition (adhesive layer), the 90° peel adhesive force measured by the above measurement test was as low as 0.3 N/25 mm.

Further, in the adhesive sheet of Comparative Example 2 in which the moisture-curable component in the adhesive composition (adhesive layer) was in a reacted state before pasting, the 90° peel adhesive force measured by the above measurement test was as low as 0.4 N/25 mm.

Moreover, in the adhesive sheet of Comparative Example 3 in which the water-absorbing material was not contained in the adhesive composition (adhesive layer), the 90° peel adhesive force measured by the above measurement test was as low as 3.9 N/25 mm.

On the other hand, in the adhesive sheets of Example 1-6, the 90° peel adhesive force measured by the above-mentioned measurement test was all 5 N/25 mm or more, and the sheets had high adhesive force to the wet surface.

Incidentally, for the adhesive sheet of Example 5, when 90° peel adhesive force (N/25 mm) was measured according to the same procedure as the above-described measurement test after the sheet was subjected to moisture-proof packaging and then aged at ordinary temperature for 30 days, it was confirmed that the adhesive force was improved to be as high as 13.1 N/25 mm, as compared with the 90° peel adhesive force (N/25 mm) before aging. In addition, from the measurement result of the reaction ratio of the isocyanate compound, it was confirmed separately that a part of the isocyanate compound in the adhesive composition (adhesive layer) in the adhesive sheet after aging for 30 days was in an unreacted state.

Moreover, for the adhesive layer made from the adhesive composition of Example 5, when an elastic modulus was measured after the layer was subjected to moisture-proof packaging and then aged at ordinary temperature for 30 days, the elastic modulus was 14.9 kPa.

It is considered that the water contained in the adhesive has promoted the moisture curing reaction of the isocyanate compound, but the elastic modulus is within a preferable range for wet adhesion and a part of isocyanate compounds in an unreacted state are present, and hence a wet adhesion effect is obtained.

[Example 7 to 9]

<Preparation of Adhesive Sheet>

(Example 7)

A high-molecular-weight polyisobutylene polymer (Opanol N80 manufactured by BASF, hereinafter also referred to as rubber-based polymer 1), a low-molecular-weight polyisobutylene polymer (Tetrax 5T manufactured by JXTG Energy Corporation, hereinafter also referred to as rubber-based polymer 2), and liquid polybutene (HV-300 manufactured by JXTG Energy Corporation, rubber-modifying component) as a base polymer were dissolved in toluene as a solvent.

Into this solution, hexamethylene diisocyanate (HDI) in an unreacted state (Basonat HA2000 manufactured by BASF SE) as a moisture-curable component, a water-absorbing material (KI gel 201K-F2 manufactured by Kuraray Trading Co., Ltd.), a tackifier (petroleum resin, Escollets 1202U manufactured by EMG Marketing G.K.), and heavy calcium carbonate (manufactured by Maruo Calcium Co., Ltd.) as a filler were blended so that the proportions of respective components relative to the total amount of the components excluding the solvent of the adhesive composition might become the proportions described in Table 2, thereby producing a coating liquid of the adhesive composition.

As a release liner, a polyester-made release film (trade name "Diafoil MRF", thickness of 38 μm, manufactured by Mitsubishi Polyester Corporation) having a release surface subjected to release treatment on one side was prepared. The coating liquid of the adhesive composition was applied to the release surface of the release liner, dried at 80°C for 5 minutes, and further dried at 130°C for 30 minutes to form an adhesive layer having a thickness of 150 μm. The other surface of the adhesive layer formed on the above release liner was pasted to a substrate film having a thickness of 25 μm to produce a single-sided adhesive sheet. As the substrate film, a PET film (resin film) manufactured by Toray Industries, Inc., a trade name "Lumirror S-10" was used. The adhesive sheet produced in this manner was cut into a size of a width of 25 mm and a length of 10 cm, and 90° peel adhesive force measurement to be mentioned later was performed.

Incidentally, in order to maintain the non-reacted state of the moisture-curable component, the adhesive sheet produced in Example 7 was sealed together with silica gel in a moisture-proof bag made of aluminum until the adhesive force measurement to be mentioned later.

(Example 8)

An adhesive sheet of Example 8 was produced in the same manner as in Example 7 except that the blending ratio was changed so that the proportions of the respective components relative to the total amount of the components of the adhesive composition excluding the solvent might become the proportions described in Table 2. Incidentally, in order to maintain the unreacted state of the moisture-curable component, the adhesive sheet produced in Example 8 was sealed together with silica gel in a moisture-proof bag made of aluminum until the adhesive force measurement to be mentioned later.

(Example 9)

An adhesive sheet of Example 9 was produced in the same manner as in Example 7 except that a rubber-based polymer-1 was used as a base polymer and the blending ratio was changed so that the proportions of the respective components relative to the total amount of the components of the adhesive composition excluding the solvent might become the proportions described in Table 2. Incidentally, in order to maintain the unreacted state of the moisture-curable component, the adhesive sheet produced in Example 9 was sealed together with silica gel in a moisture-proof bag made of aluminum until the adhesive force measurement to be mentioned later.

<Measurement of 90° Peel Adhesive Force to Wet Surface>

A slate standard plate, a product name "JIS A5430 (FB)" manufactured by Nippon Test Panel Co., Ltd. (hereinafter also referred to as slate plate), which had a thickness of 3 mm, a width of 30 mm, and a length of 125 mm, was prepared. The glossy surface of this slate plate was used. The slate plate is dried at 130°C for 1 hour, and the weight of the slate plate was measured and defined as "weight of slate plate before immersion in water".

Subsequently, in a state where the prepared slate plate was immersed in water, degassing was performed for 1 hour with an ultrasonic degassing apparatus (BRANSON 3510 manufactured by Yamato Scientific Co., Ltd.), allowed to stand overnight, and then taken out from water. The weight of the slate plate at this point was measured and defined as "weight of slate plate after immersion in water and degassing".

When the moisture content of the slate plate was calculated from the following expression based on the measured "weight of slate plate before immersion in water" and "weight of slate plate after immersion in water and degassing", the content was 25% (% by weight).

$$\text{Moisture content of slate plate (\% by weight)} = [\{(\text{Weight of slate plate after immersion in water and degassing}) - (\text{Weight of slate plate before immersion in water})\}/(\text{Weight of slate plate before immersion in water})] \times 100$$

Subsequently, immediately after the prepared adhesive sheet (test piece) from which the release liner had been peeled off was crimped and pasted onto the surface (wet surface) of the slate plate having a moisture content of 25% by reciprocating a 2 kg roller once, the sheet was immersed in water and allowed to stand at 23°C for 24 hours. Thereafter, the slate plate to which the adhesive sheet (test piece) had been pasted was taken out from the water, and 90° peel adhesive force (N/25 mm) to the slate plate was measured at a peeling temperature of 23°C and a peeling speed of 100 mm/min using a tensile tester (Technograph TG-1kN manufactured by Minebea Inc.). Table 2 shows results thereof.

Incidentally, when the measured value of the 90° peel adhesive force (N/25 mm) is 5N/25 mm or more, the adhesive force to the wet surface can be evaluated high.

(Measurement of Initial Elastic Modulus)

A sample was prepared by rolling the adhesive layer made from the adhesive composition into a string shape, and for this sample, using a tensile tester (AG-IS manufactured by Shimadzu Corporation), the initial elastic modulus of the adhesive layer was calculated from the stress-strain curve measured when the film was stretched at a rate of 50 mm/min. More specifically, it was calculated by the same method as in Examples 1 to 6 and Comparative Examples 1 to 3. Table 2 shows results thereof.

[Table 2]

Table 2

| | Adhesive composition | | | | | | | | | 90° peel adhesive force (N/25 mm) | Initial elastic modulus (kPa) |
|---|---|---|---|---|---|---|---|---|---|---|---|
| | Base polymer (% by weight) | | | Moisture-curable component (% by weight) | Reaction state of moisture-curable component | Water-absorbing material (% by weight) | Tackifier (% by weight) | Filler (% by weight) | | | |
| Example 7 | Rubber-based polymer 1 | Rubber-based polymer 2 | Rubber modifier HV300 | Basonat HA2000 | Unreacted state | KI gel | Escollets 1202U | Heavy calcium carbonate | | 20.0 | 19.7 |
| | 11.6 | 11.6 | 23.2 | 3.7 | | 3.7 | 23.1 | 23.1 | | | |
| Example 8 | Rubber-based polymer 1 | Rubber-based polymer 2 | Rubber modifier HV300 | Basonat HA2000 | Unreacted state | KI gel | Escollets 1202U | Heavy calcium carbonate | | 9.4 | 106.9 |
| | 6.0 | 6.0 | 12.0 | 2.0 | | 2.0 | 12 | 60.0 | | | |
| Example 9 | Rubber-based polymer 1 | | Rubber modifier HV300 | Basonat HA2000 | Unreacted state | KI gel | Escollets 1202U | Heavy calcium carbonate | | 5.2 | 340.2 |
| | 12.4 | | 8.7 | 2.5 | | 2.0 | 12.4 | 62.0 | | | |

In the adhesive sheets of Example 7 to 9, the 90° peel adhesive force measured by the above-mentioned measurement test was all 5 N/25 mm or more, and the sheets had high adhesive force to the wet surface.

Although the preferred embodiments of the present invention have been described above, the present invention is not limited to the above-described embodiments, and various modifications and substitutions can be added to the above-described embodiments without departing from the scope of the present invention.

Although the preferred embodiments of the present invention have been described above, the present invention is not limited to the above-described embodiments, and various modifications and substitutions can be added to the above-described embodiments without departing from the scope of the present invention.

The present application is based on Japanese Patent Application No. 2016-232749 filed on November 30, 2016 and Japanese Patent Application No. 2017-229394 filed on November 29, 2017, and the contents are fully incorporated herein by reference.

**Claims**

1. An adhesive composition comprising a base polymer, a water-absorbing material, and a moisture-curable component, wherein the moisture-curable component is contained in an unreacted state.

2. The adhesive composition according to claim 1, wherein a content of the moisture-curable component is 0.1 to 50% by weight based on all the components of the adhesive composition excluding a solvent.

3. The adhesive composition according to claim 1 or 2, which exhibits an initial elastic modulus of 400 kPa or less when forming an adhesive layer.

4. The adhesive composition according to any one of claims 1 to 3, wherein the moisture-curable component is capable of chemically bonding to an adherend.

5. The adhesive composition according to any one of claims 1 to 4, wherein the moisture-curable component is one or more selected from an isocyanate compound and an alkoxysilyl group-containing polymer.

6. The adhesive composition according to any one of claims 1 to 5, wherein the base polymer contains an acrylic polymer or a rubber-based polymer.

7. The adhesive composition according to any one of claims 1 to 6, wherein the content of the water-absorbing material is 1 to 50% by weight based on all the components of the adhesive composition excluding a solvent.

8. The adhesive composition according to any one of claims 1 to 7, wherein the water-absorbing material is a water-absorbing polymer.

9. An adhesive layer comprising the adhesive composition according to any one of claims 1 to 8.

10. The adhesive layer according to claim 9, wherein the water-absorbing material is exposed at 0.5 to 80% of the surface area of a pasting surface of the adhesive layer.

11. An adhesive sheet comprising the adhesive layer according to claim 9 or 10.

12. The adhesive sheet according to claim 11, wherein the adhesive layer is formed on a substrate.

**INTERNATIONAL SEARCH REPORT**

| International application No. |
|---|
| PCT/JP2017/042925 |

### A. CLASSIFICATION OF SUBJECT MATTER

Int.Cl. C09J201/00(2006.01)i, C09J7/00(2018.01)i, C09J7/20(2018.01)i, C09J11/06(2006.01)i, C09J1/08(2006.01)i, C09J121/00(2006.01)i, C09J133/00(2006.01)i

According to International Patent Classification (IPC) or to both national classification and IPC

### B. FIELDS SEARCHED

Minimum documentation searched (classification system followed by classification symbols)

Int.Cl. C09J201/00, C09J7/00, C09J7/20, C09J11/06, C09J11/08, C09J121/00, C09J133/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 58-171460 A (NITTO DENKI KOGYO KABUSHIKI KAISHA) 08 October 1983, claims, page 1, right column to page 2, upper right column, examples (Family: none) | 1-7, 9-12<br>8 |
| Y | JP 09-316228 A (KANEKA CORP.) 09 December 1997, paragraph [0065] (Family: none) | 8 |

☒ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 January 2018 (04.01.2018) | 23 January 2018 (23.01.2018) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

EP 3 549 993 A1

**INTERNATIONAL SEARCH REPORT**

| International application No. |
| --- |
| PCT/JP2017/042925 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2014-231586 A (DAINIPPON PRINTING CO., LTD.) 11 December 2014, claims, paragraphs [0024]-[0025], examples (Family: none) | 1-12 |
| Y | JP 02-011688 A (EIDAI CO., LTD.) 16 January 1990, claims, page 2, lower left column (Family: none) | 1-12 |

Form PCT/ISA/210 (continuation of second sheet) (January 2015)

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001354749 A
- JP 2000273418 A
- JP 2016232749 A
- JP 2017229394 A